# EUROPEAN PATENT SPECIFICATION

(11) **EP 3 512 762 B1**
(45) Date of publication and mention of the grant of the patent: **05.05.2021**
(21) Application number: 17784006.3
(22) Date of filing: 15.09.2017
(51) Int. Cl.: B62D 55/084, B62D 55/14, B62D 55/253, E01H 4/02, B62D 55/28

(54) **SUPPORT DEVICE FOR A TRACKED VEHICLE; CONVERSION KIT FOR A TRACKED VEHICLE AND TRACKED VEHICLE COMPRISING SAID SUPPORT DEVICE**
STÜTZVORRICHTUNG FÜR EIN KETTENFAHRZEUG, UMWANDLUNGSBAUSATZ FÜR EIN KETTENFAHRZEUG UND KETTENFAHRZEUG MIT SOLCH EINER STÜTZVORRICHTUNG
DISPOSITIF DE SUPPORT POUR VÉHICULE À CHENILLES, KIT DE CONVERSION POUR VÉHICULE À CHENILLES ET VÉHICULE À CHENILLES COMPRENANT LEDIT DISPOSITIF DE SUPPORT

(30) Priority: 15.09.2016 IT 201600093165
(43) Date of publication of application: 24.07.2019
(73) Proprietor: PRINOTH S.p.A., 39049 Vipiteno (IT)
(72) Inventor: KIRCHMAIR, Martin, A-6143 Pfons (AT); MAURER, Gregor, 39049 Vipiteno (IT)
(74) Representative: Cicchetti, Angelo
(86) International application number: PCT/IB2017/055600
(87) International publication number: WO 2018/051284

(56) References cited:
- WO-A1-2015/092767
- CA-A1- 2 455 074
- US-A- 1 267 825
- US-B1- 7 036 894

## Description

### TECHNICAL FIELD

The present invention relates to a support device for a tracked vehicle; a conversion kit for a tracked vehicle; and a tracked vehicle, in particular configured for preparing ski slopes, comprising said support device.

### BACKGROUND ART

A track of a tracked vehicle for preparing ski slopes generally comprises a plurality of bars arranged transversely to the direction of travel and a plurality of belts made of an elastomeric material which extend parallel to the direction of travel and to which the transverse bars are fixed so as to be evenly spaced with respect to one another along the direction of travel. Thus, the track has cavities between adjacent transverse bars and between adjacent belts. The track extends from a rear wheel to a front wheel of the tracked vehicle and is looped around the rear wheel and the front wheel. The rear wheel is generally a drive wheel and is coupled to the track. The lower portion of the track that comes into contact with the ground is the so-called traction portion of the track. Tracked vehicles are generally provided with support wheels
which are arranged between the rear wheel and the front wheel inside the loop of the track with the function of holding the traction portion in contact with the ground and distributing the mass of the tracked vehicle along the traction portion.

In use, the support wheels turn inside the track, moving between adjacent transverse bars and the respective cavities. In certain circumstances, as the support wheels turn inside the track, they generate vibrations, which in turn reduce the adherence between the support wheels and the track. The reduction in adherence between the support wheels and the track could undermine the distribution of the weight on said track which, in turn, could reduce the adherence of the track to the ground or to the snow, in particular on slopes. Moreover, the vibrations that are generated impair comfort, shorten the life of the suspensions, and accelerate wear on the actual vehicle.

WO 2015/092767 A1 discloses the preamble of claim 1 and relates to a supporting device for a crawler vehicle, in particular for a crawler vehicle for grooming ski slopes.

US 1,267,825 relates to a tractors, and particularly to that portion of the driving mechanism comprising the track and the sprockets upon which said track is mounted.

### DISCLOSURE OF INVENTION

The purpose of the present invention is to provide a support device of the type described above that reduces the inconveniences of the prior art.

According to the present invention there is provided a support device for a tracked vehicle, in particular for a tracked vehicle configured for preparing ski slopes, wherein the tracked vehicle comprises a track comprising at least a first belt and a plurality of transverse metal elements, fixed to at least the first belt; a front wheel; and a rear wheel; the support device comprising a first plurality of support wheels arranged between the rear wheel and the front wheel inside the track, and a second belt configured to be closed in a loop and stretched around the plurality of support wheels and arranged inside the track; the support wheels and the second belt being shaped so as to provide a shape coupling, preferably between an inner face of the second belt and an outer face of the support wheels; the second belt, preferably an outer face of the second belt, being configured to be arranged in contact with an inner face of the track; wherein the support wheels have a first outside diameter that is comprised between 80% and 135% of the value of a second outside diameter of the front wheel, and/or the support wheels have a first outside diameter that is comprised between 80% and 130% of the value of a third maximum outside diameter of the rear wheel.

Thanks to the present invention it is possible to reduce the oscillations that occur on the support wheels in the prior art solutions and the oscillations transmitted to the frame.

According to one embodiment of the invention, the track comprises guides for the support wheels which are connected to the transverse elements and which face towards the inside of the track, the guides being arranged in contact with the second belt.

According to one embodiment of the invention, the first plurality of support wheels comprises a pair of support wheels; and the second belt is closed in a loop and stretched around the pair of support wheels; the pair of support wheels and the second belt being shaped so as to provide a shape coupling, preferably between the inner face of the second belt and the outer face of the support wheels; the second belt, preferably the outer face of the second belt, being configured to be arranged in contact with an inner face of the track.

According to one embodiment of the invention, the support wheels have a first outside diameter that is comprised between 100% and 120% of the value of the second diameter of the front wheel.

According to one embodiment of the invention, the support wheels have a first outside diameter that is comprised between 90% and 105% of the value of the third maximum outside diameter of the rear wheel.

According to one embodiment of the invention, each support wheel comprises recesses which extend in an annular manner around the support wheel to provide the shape coupling, preferably the support wheel comprises a plurality of recesses.

According to one embodiment of the invention, the second belt comprises at least one protrusion which extends along the inner face, preferably longitudinally to the inner face, of the second belt to provide the shape coupling.

According to one embodiment of the invention, the second belt has protrusions evenly distributed along the inner face of the second belt which extend longitudinally to the inner face of the second belt; and the support wheels comprise recesses evenly distributed around the rotation axis of the support wheel with the same distribution pitch as that of the protrusions; each recess being sized to house a protrusion.

According to one embodiment of the invention, the support structure comprises a structure on which the support wheels are mounted and having a rotatable coupling configured to be connected to the frame of the tracked vehicle; preferably the plurality of support wheels is formed by a pair of support wheels borne by the structure and mounted at the ends of the structure.

According to one embodiment of the invention, the plurality of support wheels are borne by a rocker arm; the rocker arm being configured to be coupled to the frame of the tracked vehicle preferably by means of a crank.

According to one embodiment of the invention, the second belt comprises a composite elastomeric material.

According to one embodiment of the invention, the second belt has an outer face designed to couple with the inner face of the track; preferably the outer face of the second belt is smooth; preferably the outer face of the second belt is configured to be in contact with the guides.

According to one embodiment of the invention, the second belt has an outer face designed to couple with the inner face of the track; preferably the outer face of the second belt comprises diagonal or longitudinal teeth.

According to one embodiment of the invention, the support device comprises a belt tensioning device coupled to the second belt to keep the second belt tight.

According to one embodiment of the invention, the support wheels are made of a material selected from a group comprising Teflon, metal, plastic; preferably with an amount of elastomeric material.

According to one embodiment of the invention, the support device comprises a belt tensioning device configured to adjust the tension of the second belt between the plurality of support wheels.

A further purpose of the present invention is to provide a conversion kit for a tracked vehicle that reduces the inconveniences of the prior art.

According to the present invention there is provided a conversion kit for a tracked vehicle, in particular for a tracked vehicle configured for preparing ski slopes, wherein the tracked vehicle comprises a rear wheel, a front wheel, and another plurality of support wheels arranged between the rear wheel and the front wheel, facing towards an inner face of the track; the conversion kit comprising a support device according to any one of the claims from 1 to 14; wherein the plurality of support wheels are configured to replace the other plurality of support wheels.

A further purpose of the present invention is to provide a tracked vehicle that reduces the inconveniences of the prior art solutions.

According to the present invention there is provided a tracked vehicle, in particular for preparing ski slopes, the tracked vehicle comprising:
- a frame;
- two rear wheels supported by the frame;
- two front wheels supported by the frame;
- two tracks, each wound around a respective rear wheel and a front wheel and comprising a traction portion; and
- at least one support device of any one of the claims from 1 to 14, for each track; wherein each support device is arranged inside the respective track between the respective rear wheel and the respective front wheel.

According to a preferred embodiment of the present invention, the second belt of the support device is placed in contact with an inner face of the track.

A further purpose of the present invention is to provide a method of conversion of a tracked vehicle that reduces the inconveniences of the prior art solutions.

According to the present invention, there is provided a method of conversion of a tracked vehicle comprising a frame; two front wheels borne by the frame; two rear wheels borne by the frame; two tracks, wherein each track is looped around a respective front wheel and around a respective rear wheel; another plurality of support wheels borne by the frame for each track arranged inside the track and between the respective front wheel and the respective rear wheel; the method comprises the steps of removing the other plurality of support wheels from the frame and of coupling to the frame at least one support device obtained according to any one of the claims from 1 to 14 for each track between the respective front wheel and the respective rear wheel and of housing it inside the track.

### BRIEF DESCRIPTION OF THE DRAWINGS

Further characteristics and advantages of the present invention will become clear from the following description of non-limiting embodiments thereof, with reference to the accompanying figures, in which:
- Figure 1 is a side elevation view, with some parts removed for the sake of clarity, of a tracked vehicle configured for preparing ski slopes and provided with a support device of the type described above;
- Figure 2 is a side elevation view on an enlarged scale of a detail of Figure 1.
- Figure 3 is an enlarged side elevation view of a detail of Figure 1, with some parts removed for the sake of clarity; and
- Figure 4 is a cross-sectional view of Figure 3, with some parts removed for the sake of clarity and on an enlarged scale.

### BEST MODE FOR CARRYING OUT THE INVENTION

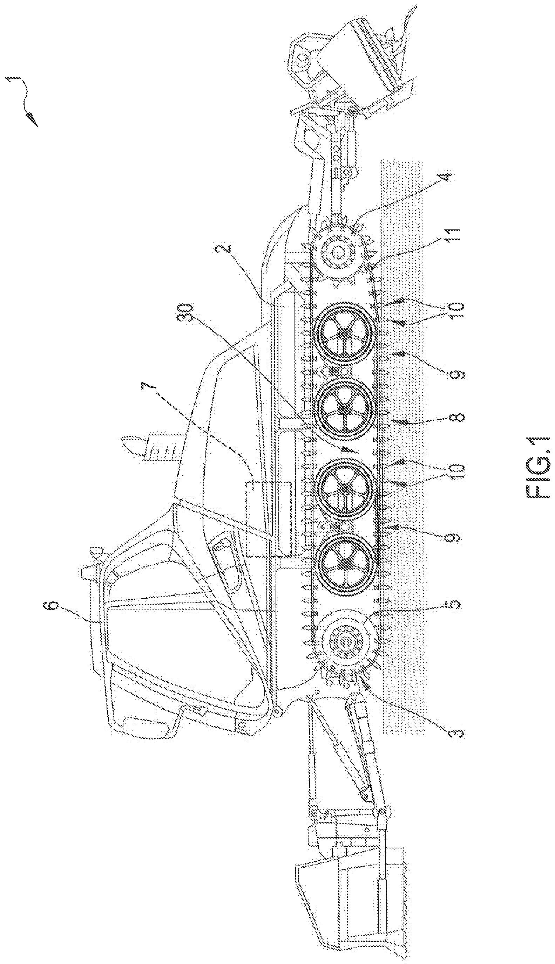

With reference to Figure 1, designated as a whole by number 1 is a tracked vehicle for preparing ski slopes. The tracked vehicle 1 comprises a frame 2; two tracks 3 (only one of which is illustrated in Figure 1); two rear wheels 4 (only one of which is illustrated in Figure 1) rotatable about an axis of rotation A1; two front wheels 5 (only one of which is illustrated in Figure 1) rotatable about an axis of rotation A2; a cab 6; and an engine 7. The rear wheels 4 are drive wheels actuated independently of one another by actuators, preferably of the hydraulic or electric or mechanical type, and are coupled to the respective tracks 3.

Each track 3 is looped around a respective one of the two rear wheels 4 and a respective one of the two front wheels 5. In other words, the rear wheel 4 and the front wheel 5 engage the track 3, along an inner face 30 of the track 3, in respective end portions of the track 3. The track 3 comprises an upper section and a lower section along which a traction portion 8 extends. In use, the traction portion is in contact with the ground to discharge the mass of the tracked vehicle 1 and the tractive force transmitted by the engine 7 through a kinematic chain to the rear wheels 5.

The tracked vehicle 1 comprises two support devices 9 for each track 3. In other words, each track 3 cooperates with two support devices 9 arranged in succession between the front wheel 5 and the rear wheel 4. The support devices 9 are arranged inside the loop of the respective track 3 between the rear wheel 4 and the respective front wheel 5 to distribute the mass of the tracked vehicle 1 along the traction portion 8 of the track 3 and compress the traction portion 8 of said track 3 against the ground in order to achieve greater adherence to the ground and reduce any slipping of the track 3 on the ground. The support devices 9 are arranged in contact with the inner face 30 of the respective track 3.

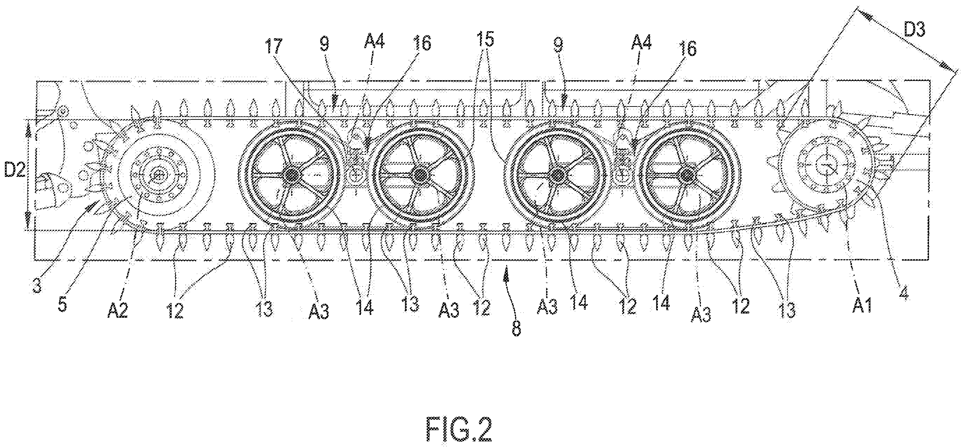

With reference to Figures 2 to 4, each track 3 comprises a plurality of elements 10 arranged transversely to the direction of travel and a plurality of belts 11 made of an elastomeric material, in particular rubber, to which the transverse elements 10 are fixed spaced apart along the direction of travel. According to one embodiment the belts 11 comprise a composite elastomeric material, for example with internal fibres.

Each transverse element 10 comprises a grouser 12 and a guide 13 which are arranged on opposite sides of the belts 11. Moreover, each grouser 12 is connected to the belts 11 by means of bolted metal plates. Thus, the grousers 12 also have the function of keeping the belts 11 apart from one another. With reference to Figures 1, 2 and 4, the belts 11 are looped and adjacent to one another along an axis parallel to the axis A1 or A2. According to a preferred embodiment, each track 3 comprises a number of belts 11 that is variable between two and eight. According to an alternative embodiment, each belt 11 comprises portions of belt which joined together form the looped belt 11.

Each support device 9 comprises a plurality of support wheels 14, in particular two wheels 14, having an outside diameter D1 which is a function of the outside diameter D2 of the front wheel 5; a belt 15 wound around the plurality of wheels 14 and stretched between the wheels 14; and a structure 16 configured to support the plurality of wheels 14 and to push the plurality of wheels 14 and the belt 15 against the inside of the track 3 and along the traction portion 8 of the track 3. The two wheels 14 of each support device 9 are aligned along the direction of travel of the tracked vehicle 1.

The wheel 14 is made of Teflon.

According to an alternative embodiment, the wheel 14 is made of metal.

According to an alternative embodiment, the wheel 14 is made of plastic.

According to an alternative embodiment, the wheel 14 comprises an amount of elastomeric material.

Materials such as Teflon or metal or plastic are chosen to reduce the friction between the belt 15 and the wheels 14 in order to reduce wear and the amount of heat that is generated.

The guides 13 are coupled to the support wheels 14 to keep the support wheels 14 in the correct position inside the respective track 3.

In more detail, the wheels 14 have an outside diameter D1 that is comprised between 80% and 135% of the value of the outside diameter D2 of the front wheel 5; in particular between 100% and 120% of the outside diameter D2 of the front wheel 5.

According to an alternative embodiment, the wheels 14 have the outside diameter D1 which is a function of an outside diameter D3 of the rear wheel 4. In more detail, the wheels 14 have an outside diameter D1 that is comprised between 80% and 130% of the value of the outside diameter D3 of the rear wheel 4; preferably between 90% and 105% of the outside diameter D3 of the rear wheel 4.

According to an alternative embodiment, the wheels 14 have the outside diameter D1 which is a function of the outside diameter D2 of the front wheel 5 and of the outside diameter D3 of the rear wheel 4. In greater detail, the wheels 14 have the outside diameter D1 that is comprised between 80% and 135% of the value of the outside diameter D2 of the front wheel 5, in particular between 100% and 120% of the outside diameter D2 of the front wheel 5; and comprised between 80% and 130% of the value of the outside diameter D3 of the rear wheel 4, preferably between 90% and 105% of the outside diameter D3 of the rear wheel 4. The outside diameter refers to the maximum outside diameter of the wheel.

The wheels 14 are arranged inside the loop of the track 3 and each has an axis of rotation A3 parallel to the axis of rotation A1 of the rear wheel 4.

The plurality of wheels 14 are mounted on the respective structure 16. In other words, each pair of wheels 14 is mounted on the respective structure 16. In more detail, the structure 16 is a rocker arm that houses one wheel of the pair of wheels 14 on its opposite ends. The structure 16 comprises at least one beam 17 for supporting the wheels 14 at the ends, in particular one wheel 14 for each end of the beam 17; and a rotatable coupling 18 that connects the beam 17 to the frame 2 of the tracked vehicle 1.

In more detail, the rotatable coupling 18 comprises a crank (not illustrated in the accompanying figures) which rotates about an axis parallel to the axis A4. The crank is joined to the frame 2 by means of a bearing or a bushing (not illustrated in the accompanying figures) that enables the rotation about the axis parallel to the axis A4. Furthermore, the crank is connected to a shock-absorbing suspension device.

The rotatable coupling 18 further comprises a bearing, or a joint or a bushing, and stops. The rotatable coupling 18 allows the crank to rotate with respect to the frame 2 about the axis A4.

With reference to Figure 1, each track 3 comprises two support devices 9 arranged in a row, in other words the axis A2 and the axes A4 are parallel to one another.

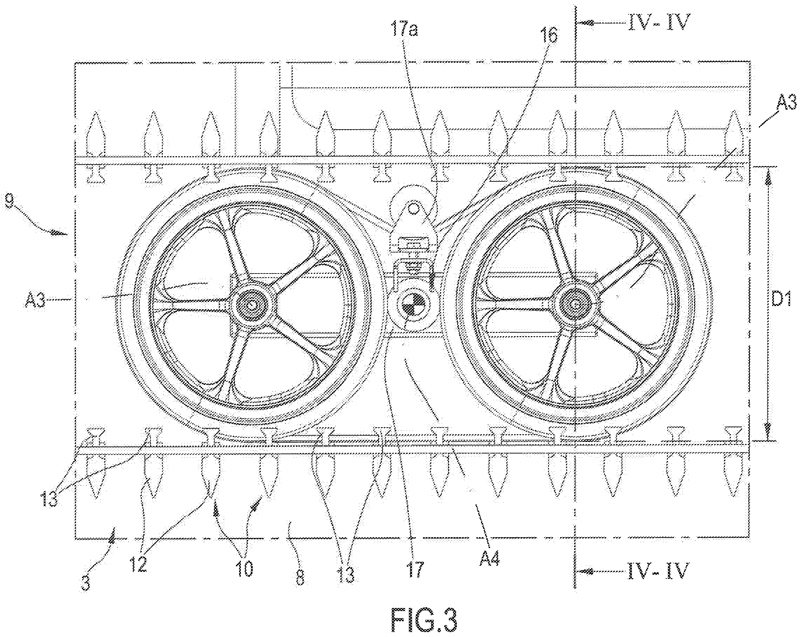

With reference to Figure 3, the belt 15 is made of an elastomeric material and fabric or of an elastomeric material only and is placed directly in contact with the guides 13. According to one embodiment, the belt 15 is made of a composite elastomeric material.

The belt 15 is wound inside the loop of each belt 11. In addition, the belt 15 is placed in contact with the inner face 30 of the track 3. In use, the belt 15 defines a sliding surface for the support wheels 14. This reduces the vibration of the tracked vehicle.

In other words, each belt 11 describes a respective inner area, the belt 15 is housed inside the inner area described by the belt 11. In more detail, the belts 11 are arranged between the guides 13 of the track 3 and the respective grousers 12. With reference to Figures 2 and 3, the belt 15 is arranged between the wheel 14 and the guide 13. In other words, the belt 15 is arranged between the wheel 14 and the inside of the track 3. The belt 15 is inscribed within a closed area described by the track 3.

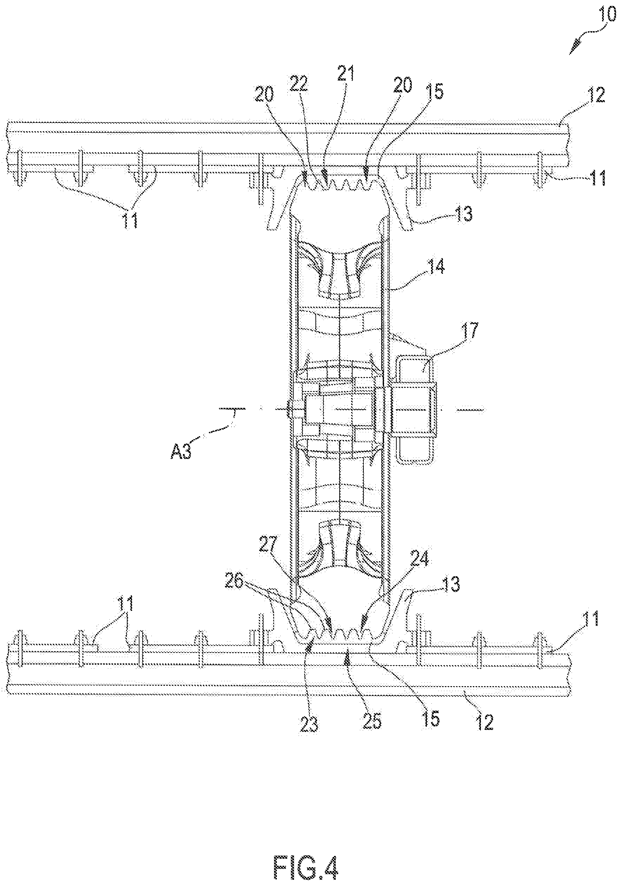

With reference to Figure 4, the wheel 14 comprises two annular ends 20 and a plurality of annular recesses 21 and a plurality of annular protrusions 22. The annular protrusions 22 extend radially to the axis A3 towards the outside of the wheel 14. The annular recesses 21 and the annular protrusions 22 are aligned with respect to one another and alternated with respect to one another along the axis A3. Furthermore, the annular recesses 21 and the annular protrusions 22 are arranged between the two annular ends 20. In other words, the wheel 14 comprises a toothed outer surface 23.

The belt 15 comprises a toothed inner face 24 and a smooth outer face 25. According to an alternative embodiment that is not illustrated in the accompanying figures, the outer face 25 is toothed, for instance, with longitudinal or diagonal teeth. The toothed inner face 24 comprises a plurality of annular protrusions 26 and a plurality of annular recesses 27. The annular protrusions 26 are alternated with the annular recesses 27. The annular protrusions 26 extend towards the inside of the belt 15. The toothed inner face 24 of the belt 15 couples with the toothed outer face 23 of the wheel 14 to define a shape coupling. The outer surface 23 of the belt 15 couples with the track 3, in particular with the guides 13. The outer surface 23 of the belt 15 couples with the inner face 30 of the track 3, in particular with the guides 13 and with the cavities.

In use, the support device 9 distributes part of the mass of the tracked vehicle 1 along the traction portion 8 of the track 3, and is able to reduce the vibrations. The reduction of the vibrations results in greater adherence between the wheels 14 and the track 3 which in turn results in better adherence of the track 3 to the ground. This application is particularly useful when the ground is covered in snow. For that purpose, the belt 15 is configured to define a better grip of the wheel 14 on the traction part 8 of the track 3. Since the wheel 14 is not directly in contact with the guide 13 it moves on a surface with less discontinuity and so generates less vibration of said tracked vehicle 1. Reducing the vibrations results in longer life of the suspensions, greater comfort and generally increases the life of the tracked vehicle 1.

According to one embodiment of the present invention, each wheel 14 is connected to the beam 17 through a slot so that the distance between the wheels 14 may vary and in this way the tension of the belt 15 can be adjusted.

According to the embodiment illustrated in the accompanying figures, each support device 9 comprises a belt tensioning device 17a arranged between the pair of wheels 14 and connected to the beam 17 so as to be borne by the beam 17. The purpose of the belt tensioning device 17a is to adjust the tension of the belt 15 and maintain a given tension between the pair of wheels 14. According to an alternative embodiment of the present invention, the belt tensioning device 17a acts on one of the wheels 14 to change the position of the wheel 14 and adjust the tension of the belt 15 between the respective wheels 14.

According to an embodiment that is not illustrated in the accompanying figures, the support device 9 comprises two rows of wheels 14 arranged on opposite sides of the beam 17 and two belts 15 wound around the wheels 14 of the respective rows.

In particular, the axes of rotation A3 of the wheels 14 of each row have the same distribution pitch and the axes of rotation A3 of the wheels of one row are staggered by a half pitch with respect to the axes of rotation A3 of the wheels 14 of the other row.

In practice, the belt 15 is placed in contact with the transverse elements 10 and is wound around the wheels 14 and kept taut.

According to an alternative embodiment of the present invention, one of the wheels 14 of the support device is a drive wheel and the rear wheel 4 is an idle wheel.

The tracked vehicle illustrated herein can be implemented by means of a production process which implements the tracked vehicle as described above from the beginning of its life. Another method for implementing the tracked vehicle as described above consists of a method of conversion of a tracked vehicle of the type known in the prior art. The method of conversion converts the prior art tracked vehicle into the tracked vehicle of the type described above.

In more detail, the support device 9 is also supplied as a conversion kit for a tracked vehicle to implement the aforesaid method of conversion.

In more detail, the invention also relates to a method of conversion of a tracked vehicle having a frame; two front wheels; two rear wheels; two tracks, each of which looped around one of the two rear wheels, and around one of the two front wheels; and at least another pair of support wheels arranged between the rear wheel and the front wheel, and facing towards an inner face of the track.

The method of conversion comprises the step of removing the other pair of support wheels from the tracked vehicle and of coupling the support device 9 to the frame 2 of the tracked vehicle and inside the respective tracks 3. In particular, of coupling two support devices 9 for each track 3. In more detail, the step consists of coupling the beam 17 to the frame 2 by means of the rotatable coupling 16. Thanks to the method of conversion, a tracked vehicle of the type known in the prior art can be converted using the conversion kit and the conversion method described above into the tracked vehicle of the present invention. As a consequence, the tracked vehicle thus modified will be provided with the support devices 9 of the present invention which are coupled to the track 3 inside the latter, in order to guarantee better adherence to the ground in particular to the snow and reduce slipping of the track 3.

The scope of protection of the present invention is defined by the claims.

## Claims

1. A support device for a tracked vehicle, in particular for a tracked vehicle configured for preparing ski slopes, wherein the tracked vehicle (1) comprises a track (3) comprising at least a first belt (11) and a plurality of transverse metal elements (10), fixed to at least the first belt (11); a front wheel (5); and a rear wheel (4); the support device (9) comprising a plurality of support wheels (14) configured to be arranged between the rear wheel (4; 38) and the front wheel (5) inside the track, and a second belt (15) closed in a loop and stretched around the plurality of support wheels (14) and configured to be arranged inside the track (3); the plurality of support wheels (14) and the second belt (15) being shaped so as to provide a shape coupling, preferably between an inner face (24) of the second belt (15) and an outer face (23) of the support wheels (11); the second belt (15), preferably an outer face (25) of the second belt (15), being configured to be arranged in contact with an inner face (30) of the track (3); **characterised in that** the support wheels (14) have a first outside diameter (D1) that is comprised between 80% and 135% of the value of a second outside diameter (D2) of the front wheel (5); and/or the support wheels (14) have a first outside diameter (D1) that is comprised between 80% and 130% of the value of a third outside diameter (D3) of the rear wheel (4).

2. The support device according to claim 1; wherein the plurality of support wheels (14) is formed by a pair of support wheels (14); and the second belt (15) is closed in a loop and stretched around the pair of support wheels (14); the pair of support wheels (14) and the second belt (15) being shaped so as to provide a shape coupling, preferably between the inner face (24) of the second belt (15) and the outer face (23) of the support wheels (14); the second belt (15), preferably the outer face (25) of the second belt (15), being configured to be arranged in contact with an inner face (30) of the track (3).

3. The support device of claim 1 or 2, wherein the support wheels (14) have a first outside diameter (D1) that is comprised between 100% and 120% of the value of the second diameter of the front wheel (5).

4. The support device of any one of the preceding claims, wherein the support wheels (14) have a first outside diameter (D1) that is comprised between 90% and 105% of the third outside diameter (D3) of the rear wheel (4).

5. The support device of any one of the preceding claims, wherein each support wheel (14) comprises recesses (21) which extend in an annular manner around the support wheel (14) to provide the shape coupling, preferably the support wheel (14) comprises a plurality of recesses (21).

6. The support device of any one of the preceding claims, wherein the second belt (15) comprises at least one protrusion (26) which extends along the inner face (24), preferably longitudinally to the inner face (24), of the second belt (15) to provide the shape coupling.

7. The support device of any one of the preceding claims, wherein the second belt (15) has protrusions (26) evenly distributed along the inner face of the second belt (15) which extend longitudinally to the inner face of the second belt (15); and the support wheels (14) comprising recesses (21) evenly distributed around the rotation axis (A3) of the support wheel (14) with the same distribution pitch as that of the protrusions (26); each recess (21) being sized to house a protrusion (26).

8. The support device of any one of the preceding claims, comprises a structure (16) on which the support wheels are mounted (14) and having a rotatable coupling (16) configured to be connected to the frame (2) of the tracked vehicle (1); preferably the plurality of support wheels (14) is formed by a pair of support wheels (14) borne by the structure (16) and mounted at the ends of the structure (16) .

9. The support device of any one of the preceding claims; wherein the plurality of support wheels (14) are borne by a rocker arm; the rocker arm being configured to be coupled to the frame (2) of the tracked vehicle (1).

10. The support device of any one of the preceding claims, wherein the second belt (15) comprises elastomeric material, preferably a composite elastomeric material

11. The support device of any one of the preceding claims, wherein the second belt (15) has an outer face (25) designed to couple with the inner face of the track (3); preferably the outer face (25) of the second belt (15) is smooth; preferably the outer face (25) of the second belt (15) is configured to be in contact with the transverse elements (10) of the track (3) and/or with the first belt (11) .

12. The support device of any one of the preceding claims, wherein the support wheels (14) are made of at least one material selected from a group comprising Teflon, metal, plastic; and preferably an amount of elastomeric material.

13. The support device of any one of the preceding claims, the track (3) comprising guides (13) for the support wheels (14) connected to the transverse elements (11) which face towards the inside of the track (3), the guides (13) being in contact with the second belt (15).

14. The support device of any one of the preceding claims, comprising a belt tensioning device (17a) coupled to the second belt (15) and configured to adjust the tension of the second belt (15) between the plurality of support wheels (14) .

15. A conversion kit for a tracked vehicle, in particular for a tracked vehicle configured for preparing ski slopes, wherein the tracked vehicle comprises a rear wheel (4); a front wheel (5), and another plurality of support wheels arranged between the rear wheel (4) and the front wheel (5), facing towards an inner face (30) of the track (3); the conversion kit comprising a support device (9) according to any one of the preceding claims; wherein the plurality of support wheels (14) are configured to replace the other plurality of support wheels.

16. A tracked vehicle, in particular for preparing ski slopes, the tracked vehicle comprising:
- a frame (2);
- two rear wheels (4) supported by the frame (2);
- two front wheels (5) supported by the frame (2);
- two tracks (3), each wound around a respective rear wheel (4) and a front wheel (5) and comprising a traction portion (8); and
- at least the support device (9) of any one of the claims from 1 to 14, for each track (3); wherein each support device is arranged inside the respective track (3) between the respective rear wheel (4; 38) and the respective front wheel (5).

17. The tracked vehicle of claim 16, wherein the second belt (15) of the support device (9) is in contact with an inner face (30) of the track (3).

18. A conversion method of a tracked vehicle comprising a frame (2); two front wheels (5) borne by the frame (2); two rear wheels (4) borne by the frame (2); two tracks (3), wherein each track (3) is looped around a respective front wheel (5) and around a respective rear wheel (4); another plurality of support wheels borne by the frame (2) for each track (3) arranged inside the track (3) and between the respective front wheel (5) and the respective rear wheel (4); the method comprises the steps of removing the other plurality of support wheels from the frame (2) and of coupling to the frame (2) at least one support device (9) according to any one of the claims from 1 to 14 for each track (3) between the respective front wheel (5) and the respective rear wheel (4) and housing it inside the track (3) .

## Patentansprüche

1. Stütz- bzw. Trägervorrichtung für ein Kettenfahrzeug, insbesondere für ein Kettenfahrzeug, das zum Präparieren von Skipisten konfiguriert ist, wobei das Kettenfahrzeug (1) eine Spur bzw. Kette (3), die zumindest einen ersten Riemen (11) und eine Mehrzahl von Quermetallelementen (10) umfasst, die an zumindest dem ersten Riemen (11) befestigt sind; ein Vorderrad (5); und ein Hinterrad (4) umfasst; wobei die Stützvorrichtung (9) eine Mehrzahl von Stütz- bzw. Trägerrädern (14), die konfiguriert sind, zwischen dem Hinterrad (4; 38) und dem Vorderrad (5) innerhalb der Kette angeordnet zu sein, und einen zweiten Riemen (15) umfasst, der in einer Schleife geschlossen ist und um die Mehrzahl von Stützrädern (14) gespannt ist und so konfiguriert ist, dass er innerhalb der Kette (3) angeordnet ist; wobei die Mehrzahl von Stützrädern (14) und der zweite Riemen (15) so geformt sind, dass sie eine Formkopplung bereitstellen, vorzugsweise zwischen einer Innenfläche (24) des zweiten Riemens (15) und einer Außenfläche (23) der Stützräder (11); wobei der zweite Riemen (15), vorzugsweise eine Außenfläche (25) des zweiten Riemens (15), so konfiguriert ist, dass er in Kontakt mit einer Innenfläche (30) der Kette (3) angeordnet ist;
**dadurch gekennzeichnet, dass** die Stützräder (14) einen ersten Außendurchmesser (D1) aufweisen, der zwischen 80% und 135% des Wertes eines zweiten Außendurchmessers (D2) des Vorderrads (5) liegt; und/oder die Stützräder (14) einen ersten Außendurchmesser (D1) aufweisen, der zwischen 80% und 130% des Wertes eines dritten Außendurchmessers (D3) des Hinterrads (4) liegt.

2. Stützvorrichtung nach Anspruch 1, wobei die Mehrzahl von Stützrädern (14) durch ein Paar Stützräder (14) gebildet werden; und der zweite Riemen (15) in einer Schleife geschlossen und um das Paar Stützräder (14) gespannt ist; wobei das Paar Stützräder (14) und der zweite Riemen (15) so geformt sind, dass sie eine Formkopplung bereitstellen, vorzugsweise zwischen der Innenfläche (24) des zweiten Riemens (15) und der Außenfläche (23) der Stützräder (14); wobei der zweite Riemen (15), vorzugsweise die Außenfläche (25) des zweiten Riemens (15), so konfiguriert ist, dass er in Kontakt mit einer Innenfläche (30) der Kette (3) angeordnet ist.

3. Stützvorrichtung nach Anspruch 1 oder 2, wobei die Stützräder (14) einen ersten Außendurchmesser (D1) aufweisen, der zwischen 100% und 120% des Wertes des zweiten Durchmessers des Vorderrads (5) liegt.

4. Stützvorrichtung nach einem der vorhergehenden Ansprüche, wobei die Stützräder (14) einen ersten Außendurchmesser (D1) aufweisen, der zwischen 90% und 105% des dritten Außendurchmessers (D3) des Hinterrads (4) liegt.

5. Stützvorrichtung nach einem der vorhergehenden Ansprüche, wobei jedes Stützrad (14) Aussparungen (21) umfasst, die sich ringförmig um das Stützrad (14) erstrecken, um die Formkopplung bereitzustellen, wobei vorzugsweise das Stützrad (14) eine Mehrzahl von Aussparungen (21) umfasst.

6. Stützvorrichtung nach einem der vorhergehenden Ansprüche, wobei der zweite Riemen (15) zumindest einen Vorsprung (26) umfasst, der sich entlang der Innenfläche (24), vorzugsweise longitudinal zu der Innenfläche (24), des zweiten Riemens (15) erstreckt, um die Formkopplung bereitzustellen.

7. Stützvorrichtung nach einem der vorhergehenden Ansprüche, wobei der zweite Riemen (15) Vorsprünge (26) aufweist, die gleichmäßig entlang der Innenfläche des zweiten Riemens (15) verteilt sind, die sich longitudinal zu der Innenfläche des zweiten Riemens (15) erstrecken; und wobei die Stützräder (14) Aussparungen (21) umfassen, die gleichmäßig um die Drehachse (A3) des Stützrads (14) verteilt sind, und zwar mit dem gleichen Verteilungsabstand wie dem der Vorsprünge (26); wobei jede Aussparung (21) so bemessen ist, dass sie einen Vorsprung (26) aufnimmt.

8. Stützvorrichtung nach einem der vorhergehenden Ansprüche, umfassend eine Struktur (16), an der die Stützräder (14) montiert sind und die eine drehbare Kupplung (16) aufweist, die konfiguriert ist, mit dem Rahmen (2) des Kettenfahrzeugs (1) verbunden zu sein; wobei vorzugsweise die Mehrzahl von Stützrädern (14) durch ein Paar Stützräder (14) gebildet ist, die durch die Struktur (16) getragen und an den Enden der Struktur (16) montiert sind.

9. Stützvorrichtung nach einem der vorhergehenden Ansprüche; wobei die Mehrzahl von Stützrädern (14) durch einen Kipphebel getragen sind; wobei der Kipphebel konfiguriert ist, mit dem Rahmen (2) des Kettenfahrzeugs (1) gekoppelt zu sein.

10. Stützvorrichtung nach einem der vorhergehenden Ansprüche, wobei der zweite Riemen (15) Elastomermaterial, vorzugsweise ein Verbundelastomermaterial, umfasst.

11. Stützvorrichtung nach einem der vorhergehenden Ansprüche, wobei der zweite Riemen (15) eine Außenfläche (25) aufweist, die zum Koppeln mit der Innenfläche der Kette (3) ausgelegt ist; wobei vorzugsweise die Außenfläche (25) des zweiten Riemens (15) glatt ist; wobei vorzugsweise die Außenfläche (25) des zweiten Riemens (15) konfiguriert ist, mit den Querelementen (10) der Kette (3) und/oder mit dem ersten Riemen (11) in Kontakt zu sein.

12. Stützvorrichtung nach einem der vorhergehenden Ansprüche, wobei die Stützräder (14) aus zumindest einem Material ausgewählt aus einer Gruppe umfassend Teflon, Metall, Kunststoff und vorzugsweise einer Menge an Elastomermaterial bestehen.

13. Stützvorrichtung nach einem der vorhergehenden Ansprüche, wobei die Klette (3) Führungen (13) für die Stützräder (14) umfasst, die mit den Querelementen (11) verbunden sind, die zu der Innenseite der Kette (3) zeigen, wobei die Führungen (13) mit dem zweiten Riemen (15) in Kontakt sind.

14. Stützvorrichtung nach einem der vorhergehenden Ansprüche, umfassend eine Riemenspannvorrichtung (17a), die mit dem zweiten Riemen (15) gekoppelt und konfiguriert ist, die Spannung des zweiten Riemens (15) zwischen der Mehrzahl von Stützrädern (14) einzustellen.

15. Umbau- bzw. Umwandlungssatz für ein Kettenfahrzeug, insbesondere für ein Kettenfahrzeug, das zum Präparieren von Skipisten konfiguriert ist, wobei das Kettenfahrzeug ein Hinterrad (4); ein Vorderrad (5) und eine weitere Mehrzahl von Stütz- bzw. Trägerrädern umfasst, die zwischen dem Hinterrad (4) und dem Vorderrad (5) angeordnet sind und zu einer Innenfläche (30) der Kette (3) zeigen; wobei der Umbausatz eine Stütz- bzw. Trägervorrichtung (9) nach einem der vorhergehenden Ansprüche umfasst; wobei die die Mehrzahl von Stützrädern (14) konfiguriert sind, die andere Mehrzahl von Stützrädern zu ersetzen.

16. Kettenfahrzeug, insbesondere zum Präparieren von Skipisten, wobei das Kettenfahrzeug umfasst:
einen Rahmen (2);
- zwei Hinterräder (4), die durch den Rahmen (2) gestützt bzw. getragen sind;
- zwei Vorderräder (5), die durch den Rahmen (2) gestützt bzw. getragen sind;
- zwei Ketten (3), die jeweils um ein jeweiliges Hinterrad (4) und ein Vorderrad (5) gewickelt sind und einen Traktionsabschnitt (8) umfassen; und
- zumindest die Stützvorrichtung (9) nach einem der Ansprüche von 1 bis 14 für jede Kette (3); wobei jede Stützvorrichtung innerhalb der jeweiligen Kette (3) zwischen dem jeweiligen Hinterrad (4; 38) und dem jeweiligen Vorderrad (5) angeordnet ist.

17. Kettenfahrzeug nach Anspruch 16, wobei der zweite Riemen (15) der Stützvorrichtung (9) mit einer Innenfläche bzw. -oberfläche (30) der Kette (3) in Kontakt ist.

18. Umbau- bzw. Umwandlungsverfahren eines Kettenfahrzeugs, das einen Rahmen (2); zwei Vorderräder (5), die durch den Rahmen (2) getragen sind; zwei Hinterräder (4), die durch den Rahmen (2) getragen sind; zwei Ketten (3), wobei jede Kette (3) um ein jeweiliges Vorderrad (5) und um ein jeweiliges Hinterrad (4) geschlungen ist; eine weitere Mehrzahl von Stütz- bzw. Trägerrädern, die durch den Rahmen (2) für jede Kette (3) getragen sind, angeordnet innerhalb der Kette (3) und zwischen dem jeweiligen Vorderrad (5) und dem jeweiligen Hinterrad (4); wobei das Verfahren die Schritte des Entfernens der weiteren Mehrzahl von Stützrädern von dem Rahmen (2) und des Koppelns an den Rahmen (2) zumindest einer Stütz- bzw. Trägervorrichtung (9) nach einem der Ansprüche von 1 bis 14 für jede Kette (3) zwischen dem jeweiligen Vorderrad (5) und dem jeweiligen Hinterrad (4) und dessen bzw. deren Unterbringung innerhalb der Kette (3) umfasst.

## Revendications

1. Dispositif de support pour un véhicule à chenilles, en particulier pour un véhicule à chenilles configuré pour la préparation de pistes de ski, dans lequel le véhicule à chenilles (1) comprend une chenille (3) comprenant au moins une première courroie (11) et une pluralité d'éléments métalliques transversaux (10), fixés au moins à la première courroie (11) ; une roue avant (5) ; et une roue arrière (4) ; le dispositif de support (9) comprenant une pluralité de roues de support (14) configurées pour être disposées entre la roue arrière (4 ; 38) et la roue avant (5) à l'intérieur de la chenille, et une deuxième courroie (15) fermée en boucle et tendue autour de la pluralité de roues de support (14) et configurée pour être disposée à l'intérieur de la chenille (3) ; la pluralité de roues de support (14) et la deuxième courroie (15) étant mis en forme de manière à fournir un accouplement de forme, de préférence entre une face interne (24) de la deuxième courroie (15) et une face externe (23) des roues de support (11) ; la deuxième courroie (15), de préférence une face externe (25) de la deuxième courroie (15), étant configurée pour être disposée en contact avec une face interne (30) de la chenille (3) ; **caractérisé en ce que** les roues de support (14) ont un premier diamètre extérieur (D1) qui est compris entre 80 % et 135 % de la valeur d'un deuxième diamètre extérieur (D2) de la roue avant (5) ; et/ou les roues de support (14) ont un premier diamètre extérieur (D1) qui est compris entre 80 % et 130 % de la valeur d'un troisième diamètre extérieur (D3) de la roue arrière (4).

2. Dispositif de support selon la revendication 1 ; dans lequel la pluralité de roues de support (14) est formée par une paire de roues de support (14) ; et la deuxième courroie (15) est fermée en boucle et tendue autour de la paire de roues de support (14) ; la paire de roues de support (14) et la seconde courroie (15) étant mis en forme de manière à fournir un accouplement de forme, de préférence entre la face interne (24) de la seconde courroie (15) et la face externe (23) des roues de support (14) ; la seconde courroie (15), de préférence la face externe (25) de la seconde courroie (15), étant configurée pour être disposée en contact avec une face interne (30) de la chenille (3).

3. Dispositif de support selon la revendication 1 ou 2, dans lequel les roues de support (14) ont un premier diamètre extérieur (D1) qui est compris entre 100 % et 120 % de la valeur du deuxième diamètre de la roue avant (5).

4. Dispositif de support selon l'une quelconque des revendications précédentes, dans lequel les roues de support (14) ont un premier diamètre extérieur (D1) qui est compris entre 90 % et 105 % du troisième diamètre extérieur (D3) de la roue arrière (4).

5. Dispositif de support selon l'une quelconque des revendications précédentes, dans lequel chaque roue de support (14) comprend des évidements (21) qui s'étendent de manière annulaire autour de la roue de support (14) pour fournir l'accouplement de forme, de préférence la roue de support (14) comprend une pluralité d'évidements (21).

6. Dispositif de support selon l'une quelconque des revendications précédentes, dans lequel la seconde courroie (15) comprend au moins une saillie (26) qui s'étend le long de la face interne (24), de préférence longitudinalement à la face interne (24), de la seconde courroie (15) pour fournir l'accouplement de forme.

7. Dispositif de support selon l'une quelconque des revendications précédentes, dans lequel la seconde courroie (15) comporte des saillies (26) uniformément réparties le long de la face interne de la seconde courroie (15) qui s'étendent longitudinalement à la face interne de la seconde courroie (15) ; et les roues de support (14) comprenant des évidements (21) uniformément répartis autour de l'axe de rotation (A3) de la roue de support (14) avec le même pas de répartition que celui des saillies (26) ; chaque évidement (21) étant dimensionné pour loger une saillie (26).

8. Dispositif de support selon l'une quelconque des revendications précédentes, comprenant une structure (16) sur laquelle les roues de support sont montées (14) et ayant un accouplement rotatif (16) configuré pour être relié au châssis (2) du véhicule à chenilles (1) ; de préférence, la pluralité de roues de support (14) est formée par une paire de roues de support (14) portées par la structure (16) et montées aux extrémités de la structure (16).

9. Dispositif de support selon l'une quelconque des revendications précédentes; dans lequel la pluralité de roues de support (14) sont portées par un culbuteur ; le culbuteur étant configuré pour être couplé au châssis (2) du véhicule à chenilles (1).

10. Dispositif de support selon l'une quelconque des revendications précédentes, dans lequel la seconde courroie (15) comprend un matériau élastomère, de préférence un matériau élastomère composite.

11. Dispositif de support selon l'une quelconque des revendications précédentes, dans lequel la deuxième courroie (15) a une face externe (25) conçue pour s'accoupler avec la face interne de la chenille (3) ; de préférence la face externe (25) de la deuxième courroie (15) est lisse ; de préférence la face externe (25) de la deuxième courroie (15) est configurée pour être en contact avec les éléments transversaux (10) de la voie (3) et/ou avec la première courroie (11).

12. Dispositif de support selon l'une quelconque des revendications précédentes, dans lequel les roues de support (14) sont faites d'au moins un matériau choisi dans un groupe comprenant le téflon, le métal, le plastique ; et de préférence une quantité de matériau élastomère.

13. Dispositif de support selon l'une quelconque des revendications précédentes, la chenille (3) comprenant des guides (13) pour les roues de support (14) reliés aux éléments transversaux (11) qui sont orientés vers l'intérieur de la chenille (3), les guides (13) étant en contact avec la deuxième courroie (15).

14. Dispositif de support selon l'une quelconque des revendications précédentes, comprenant un dispositif de tension de courroie (17a) couplé à la seconde courroie (15) et configuré pour ajuster la tension de la seconde courroie (15) entre la pluralité de roues de support (14).

15. Kit de conversion pour un véhicule à chenilles, en particulier pour un véhicule à chenilles configuré pour la préparation de pistes de ski, dans lequel le véhicule à chenilles comprend une roue arrière (4) ; une roue avant (5), et une autre pluralité de roues de support disposées entre la roue arrière (4) et la roue avant (5), tournées vers une face interne (30) de la chenille (3) ; le kit de conversion comprenant un dispositif de support (9) selon l'une quelconque des revendications précédentes ; dans lequel la pluralité de roues de support (14) sont configurées pour remplacer l'autre pluralité de roues de support.

16. Véhicule à chenilles, en particulier pour la préparation des pistes de ski, le véhicule à chenilles comprenant :
- un châssis (2) ;
- deux roues arrière (4) supportées par le châssis (2) ;
- deux roues avant (5) supportées par le châssis (2) ;
- deux chenilles (3), chacune enroulée autour d'une roue arrière (4) et d'une roue avant (5) respectives et comprenant une partie de traction (8) ; et
- au moins le dispositif de support (9) selon l'une quelconque des revendications de 1 à 14, pour chaque chenille (3) ; dans lequel chaque dispositif de support est disposé à l'intérieur de la chenille (3) respective entre la roue arrière (4 ; 38) respective et la roue avant (5) respective.

17. Véhicule à chenilles selon la revendication 16, dans lequel la deuxième courroie (15) du dispositif de support (9) est en contact avec une face interne (30) de la chenille (3).

18. Procédé de conversion d'un véhicule à chenilles comprenant un châssis (2) ; deux roues avant (5) portées par le châssis (2) ; deux roues arrière (4) portées par le châssis (2) ; deux chenilles (3), dans lequel chaque chenille (3) est enroulée autour d'une roue avant (5) respective et autour d'une roue arrière (4) respective ; une autre pluralité de roues de support portées par le châssis (2) pour chaque chenille (3) disposée à l'intérieur de la chenille (3) et entre la roue avant (5) respective et la roue arrière (4) respective ; le procédé comprend les étapes consistant à retirer l'autre pluralité de roues de support du cadre (2) et à accoupler au cadre (2) au moins un dispositif de support (9) selon l'une quelconque des revendications de 1 à 14 pour chaque chenille (3) entre la roue avant respective (5) et la roue arrière respective (4) et à le loger à l'intérieur de la chenille (3).
